# EUROPÄISCHE PATENTANMELDUNG

(11) **EP 3 150 804 A1**
(43) Veröffentlichungstag der Anmeldung: **05.04.2017**
(21) Anmeldenummer: 15187690.1
(22) Anmeldetag: 30.09.2015
(51) Int. Cl.: F01D 17/16, F02C 9/54, F02C 9/52

(54) **EINSTELLEN EINES BYPASSVENTILS IN TEILLAST**

(71) Anmelder: Siemens Aktiengesellschaft, 80333 München (DE)
(72) Erfinder: Gorynski, Markus, 44879 Bochum (DE); Kluge, Andre, 48249 Dülmen (DE); Link, Marco, 45476 Mülheim (DE); Süselbeck, Kai, 46145 Oberhausen (DE)

(57) **Zusammenfassung**

Die Erfindung betrifft ein Teillastbetriebsverfahren einer Gasturbine (1), welches folgende Schritte aufweist:
- Vermindern der Brennstoffzufuhr an wenigstens einen der Brenner der Gasturbine (1) unter gleichzeitiger Schließung von Verdichterleitschaufeln (10);
- Einstellen eines Bypassventils (21) in einer Bypassleitung (22) in Abhängigkeit von der aktuellen Stellung der Verdichterleitschaufeln (10).

## Beschreibung

Die vorliegende Erfindung betrifft ein Teillastbetriebsverfahren einer Gasturbine sowie eine Regeleinheit für eine Gasturbine und eine solche Gasturbine.

Bei Teillastbetrieb einer Gasturbine sinkt mit Absenken der Leistung, etwa aus Volllast, die zentrale Verbrennungstemperatur. Durch die geringere Verbrennungstemperatur steigt die Menge an CO-Emissionen relativ an. Aufgrund von gesetzlichen Vorgaben ist jedoch ein Gasturbinenbetreiber verpflichtet, eine vorgegebene Grenzkonzentration an CO-Emissionen nicht zu überschreiten, weshalb der Gasturbinenbetreiber typischerweise bei Teillast eine vorgegebene Minimalteillast nicht unterschreiten kann. Wenn der Gasturbinenbetreiber eine geringere Leistung abgeben möchte, so läuft er Gefahr, die Emissionsvorgaben zu überschreiten. Dies führt ggf. zu Konventionalstrafen bei dauerhafter Überschreitung.

Aufgrund der zunehmenden Flexibilisierung des Strommarktes ist es jedoch für viele Gasturbinenbetreiber erforderlich, die Gasturbine auch bei sehr tiefen Lasten betreiben zu können, ohne jedoch den CO-konformen Betriebsbereich zu überschreiten. Insofern stellt sich den Herstellern von Gasturbinen die Aufgabe, den praktisch erreichbaren, CO-konformen, minimalen Teillastbereich soweit wie möglich zu geringeren Leistungen zu erweitern.

Ansätze zur Lösung dieses Problems bestehen etwa darin, die zentrale Verbrennungstemperatur im Teillastbereich zu erhöhen, und infolgedessen die Menge an CO-Emissionen zu verringern. So kann bspw. ein Teil der Verdichterendluft um die Brennkammer herum geführt werden, so dass diese nicht bei dem Verbrennungsvorgang teilnimmt und damit auch keine thermische Herabsetzung der Verbrennungstemperatur herbeiführen kann. So kann bspw. mittels so genannter Bypassleitungen ein Teil der Verdichterluft aus dem Verdichter einer Gasturbine entnommen werden und nach Umgehung der Brennkammer dem Heißgaspfad vor und in der Entspannungsturbine der Gasturbine wieder zugeführt werden. Infolgedessen erhöht sich die zentrale Verbrennungstemperatur im Teillastbetrieb und die Konzentrationen an CO-Emissionen sinken.

Die Zuschaltung derartiger Maßnahmen, welche zur CO-Reduzierung führen können, erfordert jedoch klar definierte Schaltvorgaben, damit der Betrieb der Gasturbine, insbesondere bei tieferen Teillastbereichen weiterhin stabil unter gleichzeitiger Einhaltung der vorgegebenen CO-Grenzwerte vorgenommen werden kann. Solche Schaltvorgaben ermöglichen etwa, die Menge an im Bereich des Kompressors entnommener Bypassluft abhängig von einer Messung der CO-Konzentration des Abgases zu machen, so dass bei Erreichen des maximal erlaubbaren CO-Grenzwertes Luft über die Bypassleitung entnommen werden kann. Problematisch bei diesem Vorgehen ist jedoch, dass die Messung der CO-Menge im Abgas nur mit einer geringen Zeitverzögerung erfolgen kann, und die Zuschaltung der Bypassluftmaßnahme ebenfalls Zeit erfordert bis die Wirkung der Schaltmaßnahme eintritt. Infolgedessen kann sich bei der Gasturbine nicht nur eine Verschlechterung des Betriebs der Gasturbine einstellen, sondern der Zeitverzug kann auch dazu führen, dass die vorgegebenen CO-Grenzwerte zeitweilig überschritten werden.

Um solche Nachteile zu vermeiden, können bspw. auch Einzelmaßnahmen anhand von theoretischen Berechnungsgrößen (bspw. Verbrennungstemperatur) eingeleitet werden. Hierzu ist jedoch eine umfangreiche Bestimmung dieser theoretischen Berechnungsgrößen erforderlich, die oftmals bei unterschiedlichen Betriebsvoraussetzungen und Umgebungsbedingungen große Abweichungen von den realen Werten aufweisen können.

Aufgrund dieser aus dem Stand der Technik bekannten Nachteile ergibt sich somit ein Erfordernis, ein verbessertes Teillastbetriebsverfahren anzugeben, welches einerseits die Einhaltung vorgegebener CO-Grenzwerte ermöglicht, andererseits einen sicheren und stabilen Betrieb auch bei unteren Teillastbereichen gewährleisten kann.

Diese der Erfindung zugrundeliegende Aufgabe wird gelöst durch ein Teillastbetriebsverfahren gemäß Anspruch 1, eine Regeleinheit gemäß Anspruch 9 sowie eine Gasturbine mit einer solchen Regeleinheit gemäß Anspruch 10.

Insbesondere werden die der Erfindung zugrundeliegenden Aufgaben gelöst durch ein Teillastbetriebsverfahren einer Gasturbine, welches folgende Schritte aufweist:
- Vermindern der Brennstoffzufuhr an wenigstens einen der Brenner der Gasturbine unter gleichzeitiger Schließung von Verdichterleitschaufeln;
- Einstellen eines Bypassventils in einer Bypassleitung in Abhängigkeit von der aktuellen Stellung der Verdichterleitschaufeln.

Weiterhin werden die der Erfindung zugrundeliegenden Aufgaben gelöst durch eine Regeleinheit für eine Gasturbine, welche dazu ausgebildet ist, ein vorab wie auch nachfolgend beschriebenes Verfahren regelungstechnisch auszuführen.

Weiterhin werden die der Erfindung zugrundeliegenden Aufgaben gelöst durch eine Gasturbine mit einer Regeleinheit, wie in der vorliegenden Anmeldung beschrieben, wobei die Regeleinheit dazu ausgebildet ist, ein Verfahren wie vorab und nachfolgend beschrieben, auszuführen.

An dieser Stelle ist darauf hinzuweisen, dass das erfindungsgemäße Bypassventil der Regulierung der Menge an Bypassluft in der Bypassleitung dient, und damit auch die Menge an verdichteter Arbeitsluft beeinflussen kann, welche dem wenigstens einen Brenner der Brennkammer zugeführt wird. Typischerweise mündet die Bypassleitung in den Bereich einer Entspannungsturbine der Gasturbine und gibt dort die darin beförderte Verdichterluft zu Kühlzwecken ab.

Gemäß der vorliegenden Erfindung kann die Verminderung der Brennstoffzufuhr eine Verminderung an wenigstens einen der Brenner oder an alle Brenner der Gasturbine umfassen. Die Verminderung der Brennstoffzufuhr, dient in dem Teillastbetriebsverfahren zur Reduzierung der Freisetzung von thermischer Energie und erlaubt somit einen Betrieb der Gasturbine bei geringeren Leistungen.

Die Verdichterleitschaufeln sind bevorzugt eine verstellbare erste oder zweite Reihe von Leitschaufeln. Grundsätzlich sind alle verstellbaren Verdichterleitschaufeln einer Gasturbine geeignet, den Ansaugluftmassenstrom in dem Verdichter einer Gasturbine zu beeinflussen. Insofern sollen auch all diejenigen Verdichterleitschaufeln unter den Begriff Verdichterleitschaufeln fallen, welche eine Konditionierung des Ansaugluftmassenstroms in dem Verdichter einer Gasturbine erreichen können.

Erfindungsgemäß ist nun vorgesehen, bei einem Betriebsverfahren in Teillast, welches sich typischerweise hin zu geringeren Teillasten entwickelt, ein Bypassventil in der Bypassleitung in Abhängigkeit von der aktuellen Stellung der Verdichterleitschaufeln einzustellen. Die aktuelle Stellung betrifft hierbei die zu einem Regelungszeitpunkt anliegende Stellung bzw. die zu einem Messzeitpunkt anliegende Stellung an den Verdichterleitschaufeln. Einstellzeiten können hier jedoch zu dem Zeitpunkt der Bestimmung der aktuellen Stellung der Verdichterleitschaufeln und der Einstellung des Bypassventiles mehrere Sekunden lang sein. Insofern kann die Einstellung des Bypassventils auch mit einer geringen zeitlichen Verzögerung von einigen Sekunden erfolgen.

Der Betrieb einer Gasturbine mit verstellbaren Verdichterleitschaufeln erfordert jedoch typischerweise die Erfassung der Stellung dieser Verdichterleitschaufeln, auch um diese im Rahmen der Gasturbinenregelung für andere Eingriffszwecke berücksichtigen zu können. Insofern steht typischerweise der Wert der Stellung der Verdichterleitschaufeln über die Leittechnik der Gasturbine zur Verfügung. Dieser kann verhältnismäßig leicht genutzt werden, um ein Bypassventil in der Bypassleitung dahingehend einzustellen, dass ein stabiler Betrieb bei Teillast der Gasturbine erfolgen kann. Damit kann die Einstellung des Bypassventils im Rahmen der typischen bei der Gasturbine vorherrschenden Regelungsgeschwindigkeiten vorgenommen werden.

Weiterhin erfolgt die Einstellung des Bypassventils bedarfsorientiert, da lediglich zu Betriebszeiten, bei welchen der Ansaugluftmassenstrom verändert werden soll, auch das Bypassventil eingestellt wird. Die Einstellung des Bypassventils erfolgt somit nur dann, wenn in den Teillastbetrieb übergegangen wird, bei welchen die Gefahr besteht, in einem Bereich der nicht mehr CO-konformen Betriebsweise zu geraten. In anderen Worten wird also die Einstellung des Bypassventils erst bei oder nach dem Schließen der Verdichterleitschaufeln aktiviert. Damit unterscheidet sich die vorliegende Erfindung jedoch grundsätzlich von den Vorgehensweisen, bei welcher etwa aus gemessenen CO-Konzentrationen eine Aktivierung einer Maßnahme zur Verringerung der CO-Emissionen eingeleitet wird.

Weiterhin erweist es sich als vorteilhaft, dass die Einstellung des Bypassventils in Abhängigkeit eines Betriebsparameters erfolgt, welcher für den Betrieb einer Gasturbine zuverlässig erfasst werden kann. Die Einstellung des Bypassventils kann somit zielgerichtet und aufgrund gut verstandener Bestimmungsmethoden errechnet werden.

Weiterhin erweist es sich als vorteilhaft, dass während des Betriebs bei relativ tiefen Teillastbetriebsbereichen signifkante Wirkungsgradeinbußen des Gasturbinenbetriebs erst bei sehr niedrigen Teilasten erfolgen. Im Wesentlichen kann die Gasturbine auch bei mittleren und tiefen Teillastbereichen ohne schwere Wirkungsgradeinbuße betrieben werden. Gemäß einer ersten Ausführungsform der Erfindung ist vorgesehen, dass die Verminderung der Brennstoffzufuhr und die Schließung der Verdichterleitschaufeln bei im Wesentlichen unveränderter Austrittstemperatur der Abgase im Bereich des Austritts einer Entspannungsturbine erfolgt. In anderen Worten soll bei Verminderung der Brennstoffzufuhr und Schließung der Verdichterleitschaufeln der Wirkungsgrad der Gasturbine im Wesentlichen unverändert gehalten werden. Eine Variation um etwa 5% soll noch als unverändert angesehen werden. Dem Gasturbinenbetreiber wird damit ermöglicht, über einen großen Teillastbetriebsbereich seine Gasturbine sicher und kontrolliert zu betreiben. Weiterhin gewährleistet ein weitgehend nur geringfügig gesenkter Wirkungsgradbereich eine nur geringfügig verminderte Effizienz der Gasturbine auch bei Teillastbetrieb.

Gemäß einer weiteren Ausführungsform der Erfindung ist vorgesehen, dass die Abhängigkeit der Einstellung des Bypassventils von der aktuellen Stellung der Verdichterleitschaufeln eineindeutig ist. Infolge des eineindeutigen Zusammenhanges kann jeder Stellung der Verdichterleitschaufeln bei Teillast eine und genau eine Einstellung des Bypassventils zugeordnet werden. Damit lässt sich auch jedem Teillastpunkt eine definierte Einstellung des Bypassventils zuordnen. Diese Einstellung kann etwa vorberechnet sein und in einer geeigneten Liste hinterlegt werden. Während des Betriebsverfahrens kann somit etwa auf diese Liste zugegriffen werden und durch einfache und ohne großen Rechenaufwand die genaue Einstellung des Bypassventils ermittelt werden.

Gemäß einer weiteren Ausführungsform des erfindungsgemäßen Verfahrens ist vorgesehen, dass die Einstellung des Bypassventils ein Öffnen des Bypassventils ist. Die Öffnung des Bypassventils ist umso größer je kleiner die Öffnung der Verdichterleitschaufeln ist. Damit unterstützt die Einstellung des Bypassventils nicht nur die Stabilität des Betriebs der Gasturbine, sondern auch die Verminderung des der Brennkammer zugeführten Verdichterluftmassenstroms um die Menge an über die Bypassleitung entnommener Verdichterluft. Folglich wird auch gewährleistet, dass bei zunehmend geringeren Teillasten die zentrale Verbrennungstemperatur in der Brennkammer ansteigt und infolgedessen die Menge an CO-Emissionen sukzessive vermindert wird. In Konsequenz bleibt damit bei tiefen Teillasten die CO-Konzentration unterhalb vorgegebener Grenzwerte.

Weiterhin ist vorgesehen, dass nach einer Ausführungsform des erfindungsgemäßen Verfahrens die aktuelle Stellung der Verdichterleitschaufeln mittels eines Sensors gemessen wird, dessen Messwert dann zur Einstellung des Bypassventils herangezogen wird. Die Messung mittels Sensor ergibt eine besonders genaue Bestimmung der Stellung der Verdichterleitschaufeln und kann damit eine ebenfalls genaue Einstellung des Bypassventils erlauben. Aufgrund der Genauigkeit kann so etwa nahe der erlaubten CO-Emissionsgrenze der Teillastbetrieb auch unter Absenkung zu niedrigeren Teillasten vorgenommen werden. In anderen Worten kann ein CO-konformer Gasturbinenbetrieb auch bei sehr niedrigen Teillasten ermöglicht werden.

Weiterhin ist es denkbar, dass bei oder nach Erreichen der maximalen Stellung des Bypassventils eine Erweiterung eines vorgegebenen Verstellbereichs der Verdichterleitschaufeln vorgenommen wird. Diese Erweiterung des vorgegebenen Verstellbereichs ermöglicht eine weitergehende Absenkung des Teillastbetriebs zu kleineren Teillasten, ohne, dass die vorgegebene CO-Emissionsgrenze überschritten wird. Weiterhin kann durch die zeitliche Entkoppelung von Erweiterung des vorgegebenen Verstellbereichs der Verdichterleitschaufeln und Einstellung des Bypassventils ein relativ stabiler Betrieb der Gasturbine ermöglicht werden, der anderenfalls, etwa bei gleichzeitiger Vornahme der Maßnahmen, nicht in gleichem Maße realisiert werden könnte.

Gemäß einer Weiterbildung dieser Erfindungsidee ist vorgesehen, dass die Erweiterung des vorgegebenen Verstellbereichs der Verdichterleitschaufeln auch in Abhängigkeit von Umgebungsbedingungen erfolgt. Diese Umgebungsbedingungen sind insbesondere die Umgebungstemperatur, die Umgebungsluftfeuchte und/oder der Umgebungsdruck. Typischerweise ist die vorgenommene Erweiterung umso größer je wärmer und/oder trockener die Umgebungsbedingungen sind. Ausführungsgemäß wird also die Erweiterung des vorgegebenen Verstellbereichs der Verdichterleitschaufeln spezifisch für die jeweils vorherrschenden Umgebungsbedingungen vorgenommen. Damit kann gewährleistet werden, dass auch bei den niedrigsten möglichen Teillasten, welche durch ein Verfahren der Verdichterleitschaufeln in der Nähe des unteren Endpunktes des Verstellbereiches resultieren, immer noch ein CO-konformer Gasturbinenbetrieb ermöglicht werden kann.

Gemäß einer darüber hinaus gehenden Weiterführung kann vorgesehen sein, dass bei oder nach Erreichen des unteren Endpunktes des erweiterten Verstellbereiches der Verdichterleitschaufeln eine Zuschaltung einer Anti-Icing-Einrichtung vorgenommen wird, um Verdichterluft zur Ansaugluft zurückzuführen. Ist also bei sehr niedrigen Teillastbetriebsbereichen der untere Endpunkt des Verstellbereichs erreicht, kann durch eine dann zugeschaltete Anti-Icing-Einrichtung Verdichterluft aus dem Verdichter entnommen und der Ansaugluft zurückgeführt werden. Infolgedessen kann der Teillastbereich nach unten noch weiter abgesenkt werden, wobei jedoch die Zuschaltung der Anti-Icing-Einrichtung einen negativen Einfluss auf den Wirkungsgrad der Gasturbine nimmt. Insofern ist es wünschenswert, dass die Zuschaltung der Anti-Icing-Einrichtung erst dann erfolgt, wenn durch ein Verstellen der Verdichterleitschaufeln keine weitere Reduzierung der CO-konformen Teillast mehr erreicht werden kann. Durch die Aktivierung der Anti-Icing-Einrichtung wird nicht nur die Ansaugluft erwärmt, sondern auch bei weitgehend geschlossenen Verdichterleitschaufelstellungen die Fahrlinie nach unten zu geringeren Verbrennungstemperaturen korrigiert, um so weiterhin einen sicheren Abstand von der Pumpgrenze gewährleisten zu können.

Die Zuschaltung der Anti-Icing-Einrichtung hat typischerweise folgende drei Auswirkungen:
1.) Reduktion des Gasmassenstroms, der an der Verbrennung teilnimmt, durch Entnahme von Luft am Verdichterende.
2.) Reduktion des Ansaugluftmassenstroms, der an der Verbrennung teilnimmt, durch die Vorwärmung des angesaugten Luftmassenstroms.

Beides führt dazu, dass für eine konstante Leistung der Gasturbine der Verdichter weiter geöffnet werden muss, wodurch das Druckniveau und die Verbrennungstemperatur steigen und CO-Emission sinken. Weiterhin hat die Zuschaltung der Anti-Icing-Einrichtung auch noch den folgenden dritten Effekt:
3.) Vorwärmung und Absenken der rel. Luftfeuchtigkeit am Verdichtereintritt. Dieser Effekt führt dazu, dass das Vereisungsrisiko sinkt und der Verdichter weiter zugedreht werden kann und sich der IGV Verstellbereich des Verdichters in Richtung niedrige Teillast vergrößert.

Nachfolgend soll die Erfindung anhand einzelner Figuren näher im Detail beschrieben werden. Hierbei ist darauf hinzuweisen, dass die Figuren lediglich schematisch zu verstehen sind und damit eine mangelnde Ausführbarkeit nicht aus diesen abgeleitet werden kann.

Weiterhin ist darauf hinzuweisen, dass die in den Figuren mit gleichen Bezugszeichen versehenen technischen Merkmale gleiche technische Wirkungen aufweisen.

Fernerhin ist darauf hinzuweisen, dass die nachfolgend beschriebenen technischen Merkmale in beliebiger Kombination miteinander beansprucht werden sollen, soweit diese Kombination diese der Erfindung zugrundeliegende Aufgabe lösen kann.

Ebenfalls sollen die nachfolgend dargestellten technischen Merkmale beliebig mit den weiter oben beschriebenen Ausführungsform kombiniert werden können, soweit ebenfalls eine Lösung der der Erfindung zugrundeliegenden Aufgabe erreicht werden kann.

Hierbei zeigen:
- Figur 1: eine schematische Schaltansicht einer erfindungsgemäßen Gasturbine mit einer erfindungsgemäßen Regeleinheit;
- Figur 2: eine flussdiagrammatische Darstellung einer Ausführungsform des erfindungsgemäßen Verfahrens zum Betrieb einer Gasturbine in Teillast;
- Figur 3: eine diagrammatische Darstellung der Abhängigkeit der aktuellen Stellung der Verdichterleitschaufeln (IGV) in Abhängigkeit der Einstellung des Bypassventils (Bypass) gemäß einer Ausführungsform des erfindungsgemäßen Teillastbetriebsverfahrens;
- Figur 4: eine diagrammatische Darstellung der Gasturbinenleistung (P) in Abhängigkeit der Austrittstemperatur (ATK) der Abgase aus dem Endbereich der Entspannungsturbine einer Gasturbine sowie dem Verstellbereich VB gemäß einer Ausführungsform des erfindungsgemäßen Teillastbetriebsverfahrens.

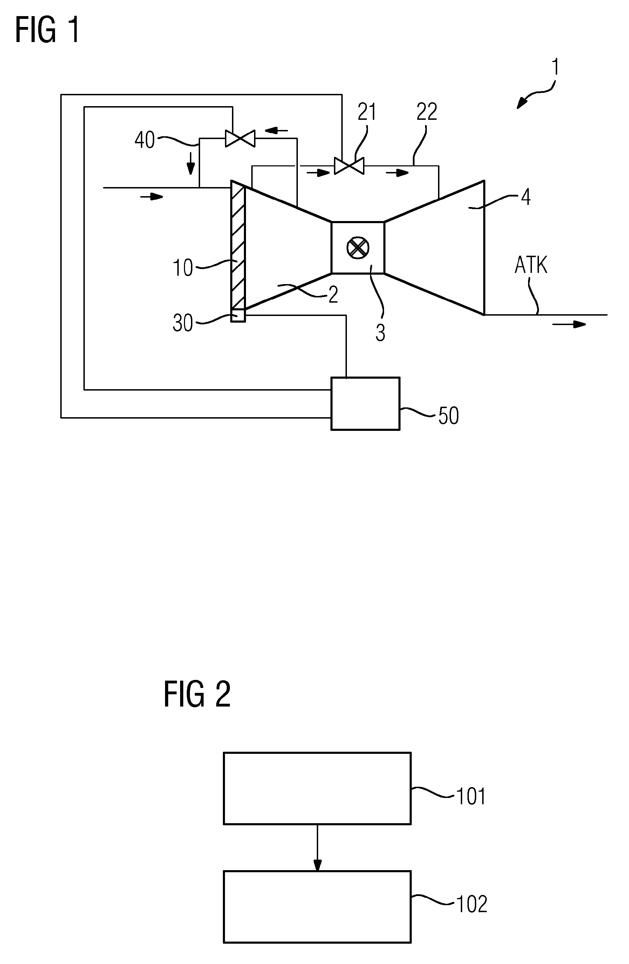

Figur 1 zeigt eine schematische Darstellung einer Ausführungsform einer erfindungsgemäßen Gasturbine 1, welche einen Verdichter 2, eine Brennkammer 3 sowie eine Entspannungsturbine 4 in fluidtechnischer Verschaltung aufweist. Bei Betrieb der Gasturbine 1 wird Ansaugluft über den Verdichter 2 aufgenommen und verdichtet und nachfolgend den Brennern der Brennkammer 3 zugeführt. Nach Verbrennung der verdichteten Ansaugluft mit vorbestimmten Mengen an Brennstoff wird das so entstandene Heißgas über eine Entspannungsturbine 4 entspannt, wobei sich die thermische Energie in drehmechanische Energie umsetzen lässt. Das aus der Entspannungsturbine 4 austretende Abgas weist hierbei eine Austrittstemperatur ATK auf. Diese Austrittstemperatur ATK kann die gemessene Austrittstemperatur wie auch eine in Bezug auf Umgebungseinflüsse rechnerisch korrigierte Austrittstemperatur sein.

Bei Ausführen des erfindungsgemäßen Teillastbetriebsverfahren durch die Gasturbine 1 wird nun die Menge an Brennstoff vermindert, welche wenigstens einen Brenner der Gasturbine 1 zugeführt wird, wobei gleichzeitig die Verdichterleitschaufeln 10 am Eingang des Verdichters 2 zunehmend geschlossen werden. Mit Hilfe eines Sensors 30, welcher im Bereich der Verdichterleitschaufeln 10 am Eingang des Verdichters 2 angeordnet ist, kann nun die aktuelle Stellung der Verdichterleitschaufeln ermittelt werden. Auf Grundlage der so ermittelten Messgrößen kann nun mittels der Regeleinheit 50 ein Bypassventil 21 in einer Bypassleitung 22 entsprechend eingestellt werden. Mit zunehmender Schließung der Verdichterleitschaufeln wird hierbei das Bypassventil zunehmend geöffnet.

Ist nun bei sehr geringen Teillasten das Bypassventil 21 vollständig geöffnet, ist ausführungsgemäß vorgesehen, einen vorliegend nicht weiter gezeigten Verstellbereich VB für die Verdichterleitschaufeln soweit zu ändern, dass der untere Endpunkt Y1 des Verstellbereichs VB zu geringeren Werten hin verschoben wird. Infolgedessen können die Verdichterleitschaufeln 10 bei Bedarf auch jenseits des vorhergehenden unteren Endpunkts Y1, also des ursprünglich vorgegebenen Endpunktes Y1, zu kleineren Werten hin geschlossen werden. Erst wenn die Verdichterleitschaufeln 10 an diesem unteren Endpunkt Y1 des Verstellbereichs VB angekommen sein sollten, sieht eine Ausführungsform der Erfindung vor, eine Anti-Icing-Einrichtung 40 zu aktivieren, mit deren Hilfe Luft aus dem Verdichter in die Ansaugluftströmung überführt wird. Die Aktivierung der Anti-Icing-Einrichtung 40 ist hierbei aber erst dann vorzunehmen, wenn eine weitere Schließung der Verdichterleitschaufeln 10 unterhalb des nun erweiterten unteren Endpunktes Y1 des Verstellbereiches VB nicht mehr vorgenommen werden kann, ohne etwa CO-Grenzwerte zu überschreiten. Die Aktivierung der Anti-Icing-Einrichtung 40 wird auch mittels der Regeleinheit 50 vorgenommen.

Figur 2 zeigt eine flussdiagrammatische Darstellung einer Ausführungsform des erfindungsgemäßen Teillastbetriebsverfahrens einer Gasturbine, welches folgende Schritte aufweist
- Vermindern der Brennstoffzufuhr an wenigstens einen der Brenner der Gasturbine 1 unter gleichzeitiger Schließung von Verdichterleitschaufeln 10 (erster Verfahrensschritt 101) ;
- Einstellen eines Bypassventils 21 in einer Bypassleitung 22 in Abhängigkeit von der aktuellen Stellung der Verdichterleitschaufeln 10 (zweiter Verfahrensschritt 102).

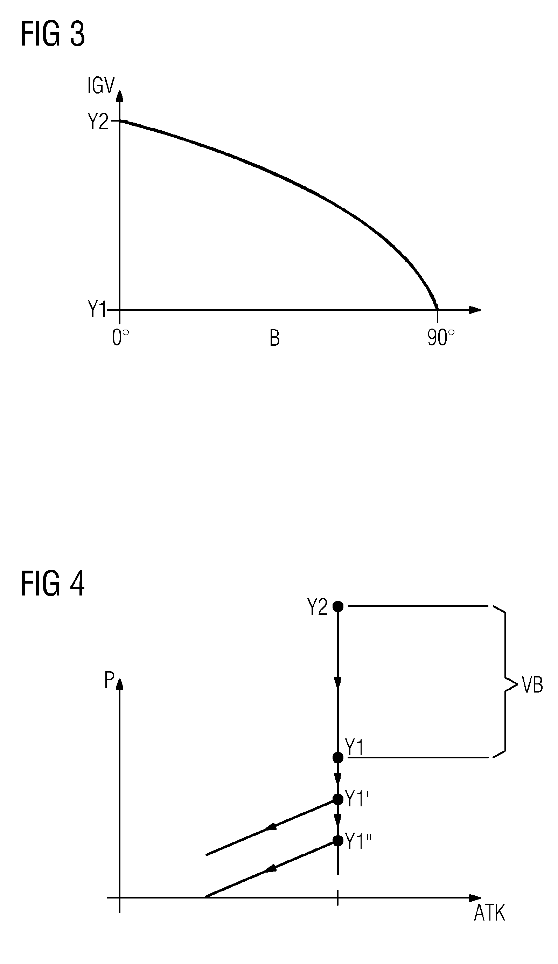

Figur 3 zeigt eine diagrammatische Darstellung der Abhängigkeit der Einstellung (Bypass) des Bypassventils 21 in der Bypassleitung 22 in Abhängigkeit von der aktuellen Stellung der Verdichterleitschaufeln 10 (IGV). Das Bypassventil 21 kann hierbei über einen Bereich von 0° bis 90° variiert werden. Die Verdichterleitschaufeln 10 werden von einer vollständigen Öffnung (oberer Endpunkt Y2 des Verstellbereichs VB) bis zu einem unteren Endpunkt Y1 des Verstellbereichs VB verfahren. Tritt nun die Gasturbine 1 etwa in einen Teillastbetrieb über, werden die Verdichterleitschaufeln 10 sukzessive von dem oberen Endpunkt Y2 des Verstellbereichs VB zu dem unteren Endpunkt Y1 des Verstellbereichs VB verfahren. Gleichzeitig kann jedoch jeder Stellung der Verdichterleitschaufeln 10 über diesen Verfahrbereich eineindeutig eine Einstellung des Bypassventils 21 zugeordnet werden. Hierbei ist das Bypassventil 21 bei Betrieb am oberen Endpunkt 2 des Verstellbereichs VB praktisch geschlossen, jedoch am Endpunkt Y1 des Verstellbereichs VB vollständig geöffnet. Die Einstellung des Bypassventils 21 kann also leicht und ohne weitere Betriebsparameter vollständig in Abhängigkeit der Stellung der Verdichterleitschaufeln 10 vorgenommen werden.

Figur 4 zeigt eine diagrammatische Darstellung der Abhängigkeit der Gasturbinenleistung P in Abhängigkeit der Austrittstemperatur ATK am Ende der Entspannungsturbine 4. Hierbei werden während einer Ausführungsform des erfindungsgemäßen Teillastbetriebsverfahrens die Verdichterleitschaufeln 10 von dem oberen Endpunkt Y2 des Verstellbereichs zu einem unteren Endpunkt Y1 des Verstellbereichs VB verfahren. Wie zu erwarten, nimmt dabei die Leistung der Gasturbine ab, wobei bei gleichbleibendem Wirkungsgrad die Austrittstemperatur ATK des Abgases aus der Entspannungsturbine 4 im Wesentlichen konstant bleibt. Dies kann aus der konstanten Austrittstemperatur ATK des Abgases geschlossen werden, da beide Größen miteinander in praktisch linearer Beziehung stehen. Ist nun jedoch etwa bei Ausführen des Teillastbetriebsverfahrens das Bypassventil 21 vollständig geöffnet, kommt es zu einer Erweiterung des Verstellbereichs VB, wobei der ursprüngliche untere Endpunkt Y1 nun ersetzt wird durch einen bei geringeren Leistungen liegenden neuen erweiterten unteren Endpunkt Y1' oder einen sogar noch darunter liegenden unteren Endpunkt Y1". Die Wahl der jeweiligen unteren Bereiche des Verstellbereichs VB kann hierbei in Abhängigkeit der Umgebungsbedingungen erfolgen. Wie nun die gezeigten möglichen Fahrlinien darstellen, kommt es nach Erreichen des unteren Endpunktes Y1', Y1" durch die Verdichterleitschaufeln 10 normalerweise zu einer Absenkung der Austrittstemperatur ATK, da nun der Ansaugluftmassenstrom nicht mehr weiter vermindert werden kann. Gemäß einer Ausführungsform der Erfindung wird vorgeschlagen, eine Anti-Icing-Einrichtung 40 zuzuschalten.

Weitere Ausführungsformen ergeben sich aus den Unteransprüchen.

## Patentansprüche

1. Die Erfindung betrifft ein Teillastbetriebsverfahren einer Gasturbine (1), welches folgende Schritte aufweist:
- Vermindern der Brennstoffzufuhr an wenigstens einen der Brenner der Gasturbine (1) unter gleichzeitiger Schließung von Verdichterleitschaufeln (10);
- Einstellen eines Bypassventils (21) in einer Bypassleitung (22) in Abhängigkeit von der aktuellen Stellung der Verdichterleitschaufeln (10).

2. Verfahren nach Anspruch 1,
**dadurch gekennzeichnet, dass** die Verminderung der Brennstoffzufuhr und die Schließung der Verdichterleitschaufeln (10) bei im Wesentlichen unveränderter Austrittstemperatur (ATK) der Abgase im Bereich des Austritts einer Entspannungsturbine (4) erfolgt.

3. Verfahren nach einem der vorhergehenden Ansprüchen,
**dadurch gekennzeichnet, dass** die Abhängigkeit der Einstellung des Bypassventils (21) von der aktuellen Stellung der Verdichterleitschaufeln (10) eineindeutig ist.

4. Verfahren nach einem der vorhergehenden Ansprüchen,
**dadurch gekennzeichnet, dass** die Einstellung des Bypassventils (21) ein Öffnen des Bypassventils (21) ist.

5. Verfahren nach einem der vorhergehenden Ansprüchen,
**dadurch gekennzeichnet, dass** die aktuelle Stellung der Verdichterleitschaufeln (10) mittels eines Sensors (30) gemessen wird, dessen Messwert dann zur Einstellung des Bypassventils (21) herangezogen wird.

6. Verfahren nach einem der vorhergehenden Ansprüchen,
**dadurch gekennzeichnet, dass** bei oder nach Erreichen der maximalen Stellung des Bypassventils (21) eine Erweiterung eines vorgegebenen Verstellbereichs (VB) der Verdichterleitschaufeln (10) vorgenommen wird.

7. Verfahren nach Anspruch 5,
**dadurch gekennzeichnet, dass** die Erweiterung des vorgegebenen Verstellbereichs (VB) der Verdichterleitschaufeln (10) auch in Abhängigkeit von Umgebungsbedingungen erfolgt.

8. Verfahren nach einem der vorhergehenden Ansprüche 6 oder 7,
**dadurch gekennzeichnet, dass** bei oder nach Erreichen des minimalen Punktes des erweiterten Verstellbereichs (VB) der Verdichterleitschaufeln (10) eine Zuschaltung einer Anti-Icing-Einreichung (40) vorgenommen wird, um Verdichterluft zur Ansaugluft zurück zu führen.

9. Regeleinheit (50) für eine Gasturbine (1), welche dazu ausgebildet ist, ein Verfahren nach einem der vorhergehenden Ansprüche regelungstechnisch auszuführen.

10. Gasturbine (1) mit einer Regeleinheit (50) nach Anspruch 9, welche Regeleinheit (50) dazu ausgebildet ist, ein Verfahren nach einem der vorhergehenden Ansprüche 1 bis 8 mit der Gasturbine (1) auszuführen.
